# FASCICULE DE BREVET EUROPEEN

(11) **EP 1 741 051 B1**
(45) Date de publication et mention de la délivrance du brevet: **19.01.2011**
(21) Numéro de dépôt: 05730046.9
(22) Date de dépôt: 26.04.2005
(51) Int. Cl.: G06K 19/077

(54) **SUPPORT D'INFORMATION PORTABLE AVEC TRANSPONDEURS**
TRAGBARER INFORMATIONSTRÄGER MIT TRANSPONDERN
PORTABLE INFORMATION CARRIER HAVING TRANSPONDERS

(30) Priorité: 27.04.2004 CH 732042004
(43) Date de publication de la demande: 10.01.2007
(73) Titulaire: NagraID SA, 2322 Crêt-du-Locle (CH)
(72) Inventeur: DROZ, François, CH-2035 Corcelles (CH)
(74) Mandataire: Wenger, Joel-Théophile
(86) Numéro de dépôt international: PCT/IB2005/051352
(87) Numéro de publication internationale: WO 2005/104024

(56) Documents cités:
- DE-A- 10 233 927
- DE-A- 19 721 057
- US-A- 6 121 544

## Description

### Domaine de l'invention

La présente invention concerne une application particulière où des transpondeurs sont intégrés dans un support d'information portable tel qu'un document comportant plusieurs feuillets comme par exemple un passeport, un permis, une attestation de membre d'une association ou autre document de légitimation.

### État de la technique

Un transpondeur ou "RFID Tag" est un élément électronique comprenant au moins une puce connectée à une antenne comportant une mémoire dans laquelle des données numériques sont stockées. Le contenu de cette mémoire peut être consulté ou lu à l'aide d'un lecteur approprié qui transmet un signal par voie électromagnétique destiné à être capté par l'antenne du transpondeur. Ce signal fournit l'énergie nécessaire à l'activation de la puce qui émet à son tour au lecteur, via la même antenne, un signal de réponse contenant les données stockées dans la mémoire de la puce.

Mis à part les cartes à puce sans contact, une application courante des transpondeurs consiste à les intégrer dans des étiquettes qui peuvent être collées ou attachées sur un objet quelconque (marchandises dans un magasin, pièces détachées dans un entrepôt, bagages, etc.).

Grâce à leur épaisseur réduite et dans un but de protection contre les contrefaçons, des transpondeurs peuvent aussi être directement noyés dans la matière constituant les objets tels que des documents de valeurs, des billets de banques, des disques compacts, des badges, des cartes etc.

Lorsque plusieurs transpondeurs sont fixés ou implantés dans un objet, leur lecture peut devenir plus difficile car, étant alimentés tous en même temps par le champ électromagnétique du lecteur, ils répondent aussi simultanément. Afin de distinguer une réponse d'un transpondeur de celle d'un autre, il est nécessaire de les isoler électromagnétiquement au moyen d'éléments de blindage. Le Document DE 19721057 A décrit un support d'information portable comprenant de tels transpondeurs.

Le document US6176425 décrit un système où un ensemble de transpondeurs localisé sur un objet est géré par un lecteur en charge de capter séquentiellement les informations en provenance de chaque transpondeur. Ceux-ci possèdent une zone de lecture individuelle dans laquelle il est possible de lire les données stockées dans le transpondeur concerné.

Afin de sélectionner un transpondeur donné, des éléments de blindage mobiles situés dans le voisinage du transpondeur peuvent être positionnés de différentes façons. Selon leur position, ces éléments de blindages permettent soit de diriger le signal émis par l'antenne du transpondeur dans une direction donnée sans chevaucher la zone de lecture d'un autre transpondeur, soit de masquer les transpondeurs à laisser inactifs pendant la lecture d'un transpondeur isolé.

Ces éléments de blindages connus sous forme de feuilles électromagnétiquement conductrices ont la propriété d'absorber l'énergie électromagnétique transmise par le lecteur de manière à bloquer l'activation de la puce du transpondeur. Des exemples de réalisation de telles feuilles et leur composition sont décrits dans les documents US 4774148 et US 6344155.

### Description sommaire de l'invention

Le but de la présente invention est de proposer un support d'information portable équipé d'un transpondeur pouvant être activé et désactivé lors de l'utilisation dudit support sans recourir à un dispositif spécifique à actionner.

Ce but est atteint par un support d'information portable comprenant au moins deux parties sensiblement planes articulées l'une à l'autre formant un ensemble dont une partie est superposable sur l'autre, la première partie comporte un transpondeur disposé dans le plan de ladite partie, la seconde partie comporte un élément de blindage s'étendant sur tout ou partie de ladite partie, ledit transpondeur étant destiné à être lu au moyen d'un lecteur approprié transmettant un signal électromagnétique activant l'émission d'une réponse par ledit transpondeur, **caractérisé en ce que** ledit transpondeur de la première partie est positionné en regard de l'élément de blindage de la seconde partie lorsque les deux parties sont superposées empêchant l'activation du transpondeur par absorption du signal transmis par le lecteur, ladite activation ne s'effectuant que lorsque lesdites parties sont écartées l'une de l'autre et laissant apparaître le transpondeur éloigné de l'élément de blindage.

Dans une réalisation préférée, le support d'information portable selon l'invention consiste en un livret formé par un feuillet plié en deux parties égales dont l'une comporte un transpondeur en général intégré dans ledit feuillet. L'autre partie comporte un élément de blindage occupant une zone dont la surface correspond au moins à celle occupée par le transpondeur sur le premier feuillet. Cet élément de blindage est constitué par une feuille électromagnétiquement conductrice formant une couche intégrée dans le feuillet par exemple. Lorsque les deux feuillets sont pliés, c'est-à-dire superposés l'un sur l'autre, le transpondeur du premier feuillet se trouve en regard de l'élément de blindage du second feuillet.

Une feuille électromagnétiquement conductrice représente ici une feuille homogène ou non (grillage par exemple) absorbant à la fois le champ électrique et le champ magnétique transmis par le dispositif de lecture du transpondeur. La matière de cette feuille sera choisie en fonction de la fréquence du champ électromagnétique. En effet, plus la fréquence augmente, plus grande sera la proportion du champ magnétique à absorber par rapport au champ électrique et inversément.

Lorsque le livret est fermé, le transpondeur ne peut pas être activé car le blindage situé sous le transpondeur absorbe l'énergie transmise par le lecteur, tandis que, lorsque le livret est ouvert, le blindage est situé à côté du transpondeur qui peut être ainsi lu sans difficulté.

Selon une variante de l'invention, chaque feuillet du livret comporte un transpondeur et un élément de blindage positionnés de sorte que lorsque le livret est fermé, les transpondeurs sont posés sur un élément de blindage correspondant du feuillet opposé à celui portant ledit transpondeur. Dans ce cas, lorsque le livret est ouvert, chaque transpondeur peut être lu indépendamment l'un de l'autre, les éléments de blindage étant éloignés des transpondeurs.

Selon une autre variante, le livret comprend une pluralité de feuillets reliés à la façon des pages d'un livre ou d'un cahier. Chaque feuillet comporte un transpondeur pouvant être lu individuellement sans que les transpondeurs des feuillets précédents ne soient activés. Cette lecture s'effectue lorsque le livret est ouvert de manière à présenter le transpondeur du feuillet à lire comme dans la variante minimale à deux feuillets. Les transpondeurs des feuillets superposés et non visibles sont désactivés par un élément de blindage intégré dans le feuillet recouvrant lesdits transpondeurs.

### Brève description des figures

L'invention sera mieux comprise grâce à la description détaillée qui va suivre et qui se réfère aux dessins annexés qui sont donnés à titre d'exemple nullement limitatif, dans lesquels:
- la figure 1 illustre une vue en perspective d'un livret ouvert à deux feuillets articulés dont l'un comporte un transpondeur et l'autre un élément de blindage.
- la figure 2 illustre le livret de la figure 1 fermé montrant le transpondeur posé sur l'élément de blindage.
- la figure 3 montre une vue en perspective d'un livret ouvert à trois feuillets comportant chacun un transpondeur et des éléments de blindage correspondants.
- la figure 4 illustre une vue plané du livret de la figure 3 avec les deux premiers feuillets ouverts.
- la figure 5 illustre une vue plane du livret de la figure 3 avec les deux derniers feuillets ouverts.
- la figure 6 illustre le livret de la figure 3 fermé montrant les différents transpondeurs posés sur leurs éléments de blindage respectifs.
- la figure 7 représente une variante où deux parties d'un support d'information sont articulées selon un axe de rotation perpendiculaire aux-dites parties.
- la figure 8 montre le support de la figure 7 avec ses deux parties articulées superposées.
- la figure 9 illustre un exemple de support d'information où deux feuillets de dimensions différentes sont articulés selon un axe de rotation.
- la figure 10 illustre un exemple de support d'information où quatre feuillets de dimensions et de formes diverses sont articulés selon des axes d'orientation et de type différents.

### Description détaillée de l'invention

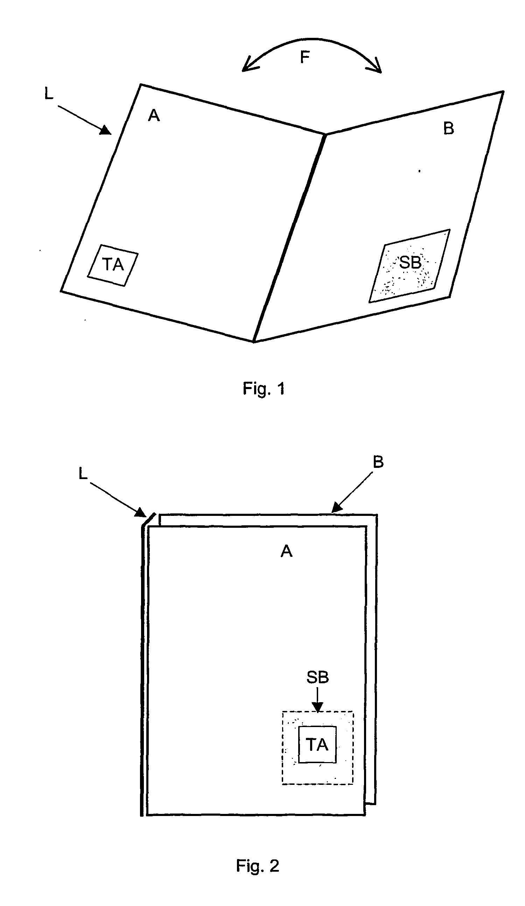

La figure 1 montre une vue générale d'un livret (L) comprenant deux feuillets (A) et (B). Le premier feuillet (A) comporte un transpondeur (TA) et le second feuillet (B) comporte un élément de blindage (SB). Les feuillets (A, B) sont reliés soit par un pli ou tout autre charnière permettant leur articulation aisée pour ouvrir et fermer le livret (L) selon la flèche (F).

Le transpondeur (TA) et l'élément de blindage (SB) peuvent être soit collés sur l'une ou l'autre des faces des feuillets, soit intégrés ou noyés dans la matière selon une variante préférée offrant une sécurité accrue. Leur position sur les feuillets (A, B) dépend d'une part des caractères et/ou des graphismes imprimés sur lesdits feuillets (A, B) et d'autre part de leurs fonctions respectives. En effet, le transpondeur (TA) est positionné sur le feuillet (A) de sorte que l'élément de blindage (SB) situé sur le feuillet (B) se superposent lorsque que le livret (L) est fermé comme illustré par la figure 2. Autrement dit, le transpondeur (TA) et l'élément de blindage (SB) correspondant sont situés symétriquement de part et d'autre de l'axe formé par la charnière reliant les feuillets (A) et (B) lorsque le livret (L) est ouvert à plat.

La surface occupée par l'élément de blindage sur le feuillet (B) dépend de celle occupée par le transpondeur sur le feuillet (A) et du pouvoir d'absorption d'énergie électromagnétique du matériau qui le constitue.

Le rôle de cet élément de blindage (SB) est de bloquer la lecture du transpondeur (TA) lorsque le livret est fermé. Dans ce cas, l'élément de blindage (SB) se trouve sous le transpondeur (TA) à faible distance de celui-ci. Le signal électromagnétique transmis par un lecteur de transpondeur ainsi absorbé ou fortement atténué par l'élément de blindage (SB) devient insuffisant pour alimenter le transpondeur (TA) avec l'énergie nécessaire à l'émission de sa réponse. Par conséquent, il est donc impossible de lire le transpondeur (TA) tant que le livret (L) reste fermé. Une fois le livret ouvert et posé à plat, l'élément de blindage se trouve hors de la zone de lecture du transpondeur et donc sans effet sur le signal transmis par le lecteur qui peut ainsi alimenter normalement le transpondeur (TA) ce qui lui permet de répondre de la manière appropriée.

Selon une variante de l'invention, les deux feuillets (A, B) peuvent être munis d'un transpondeur. Dans ce cas, un élément de blindage correspondant est situé de part et d'autre de la charnière reliant les deux feuillets de façon que, lorsque le livret est fermé, chaque transpondeur est recouvert par son élément correspondant. Ce n'est seulement qu'à l'ouverture du livret qu'il est possible de lire chaque transpondeur l'un après l'autre sans que le signal du lecteur ne soit altéré par un des éléments de blindage.

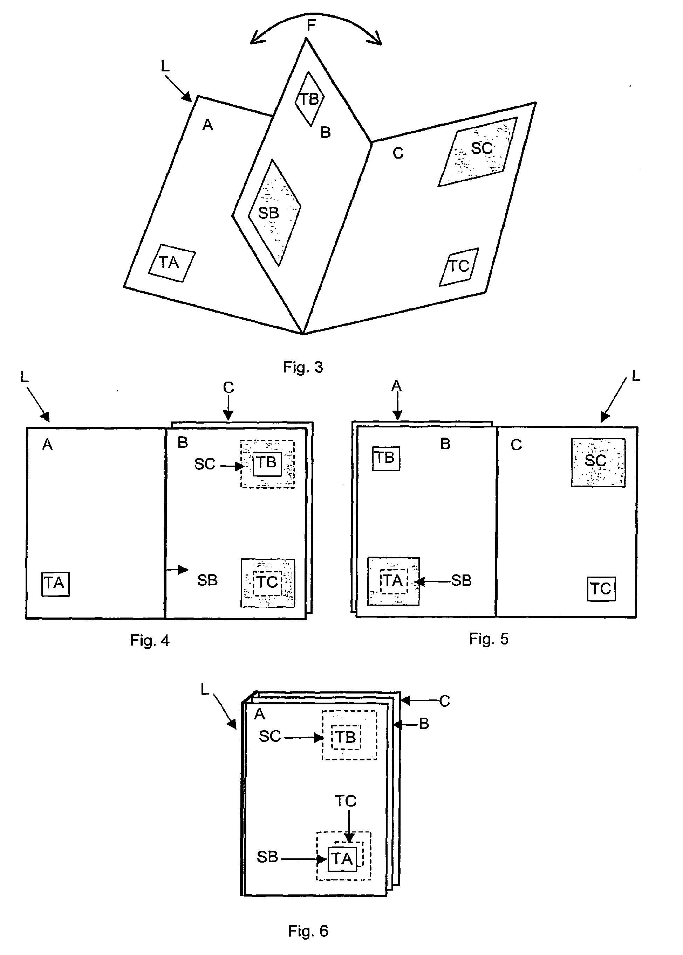

Selon une autre variante, le livret peut comporter une pluralité de feuillets comme illustré dans la figure 3 où trois feuillets (A), (B) et (C) sont reliés ensemble par une charnière. Selon le nombre de feuillets du livret, cette charnière peut se présenter sous plusieurs formes telle que des agrafes, des anneaux, une spirale, un collage à la façon d'une reliure d'un livre etc.

Dans l'exemple illustré par la figure 3, chacun des trois feuillets (A, B, C) comporte un transpondeur (TA, TB, TC). Des éléments de blindages (SB, SC) sont disposés de façon à permettre la lecture sélective des transpondeurs (TA, TB, TC). lorsque le livret est ouvert en présentant les feuillets deux par deux. Par contre, lorsque le livret est fermé aucun dès transpondeurs (TA, TB, TC) ne peut être lu à cause des éléments de blindage (SB, SC) qui se superposent sur lesdits transpondeurs (TA, TB, TC).

Le premier feuillet (A) du livret (L) comporte un transpondeur (TA), le second feuillet (B) comporte un transpondeur (TB) et un élément de blindage (SB) placé symétriquement au transpondeur (TA) du premier feuillet (A) par rapport à l'axe de la charnière reliant les feuillets. Le troisième feuillet (C) comporte un transpondeur (TC) placé symétriquement à l'élément de blindage (SB) du deuxième feuillet (B) et un élément de blindage (SC) placé lui aussi symétriquement au transpondeur (TB) du deuxième feuillet (B).

La figure 4 montre le livret (L) de la figure 3 ouvert à plat aux deux premier feuillets (A) et (B). Le transpondeur (TA) du feuillet (A) seul peut être lu car le transpondeur (TB) du feuillet (B) est posé sur l'élément de blindage (SC) situé sur le troisième feuillet (C) recouvert par le deuxième feuillet (B). Le transpondeur (TC) du troisième feuillet (C) ne peut pas non plus être lu car il est recouvert par l'élément de blindage (SB) du deuxième feuillet (B).

La figure 5 montre le livret (L) ouvert à plat au deuxième et troisième feuillet (B, C). Ici, ce sont les transpondeurs (TB) et (TC) des feuillets (B) et (C) respectivement qui peuvent être lus car n'étant pas posés sur des éléments de blindage. Seul le transpondeur (TA) du premier feuillet (A) ne peut pas être lu car il est recouvert par l'élément de blindage (SB) du deuxième feuillet (B).

Ainsi pour lire successivement les transpondeurs (TA; TB, TC) portés par chacun des feuillets (A; B; C) du livret (L), il suffit de tourner les pages constituées par lesdits feuillets l'une après l'autre de manière à les présenter ouvertes deux par deux au lecteur.

La figure 6 montre le livret (L) fermé où aucun des transpondeurs (TA,TB, TC) ne peut être lu que ce soit depuis l'une ou l'autre des faces extérieures du livret (L). En effet, chaque transpondeur (TA, TB, TC) est recouvert par un élément de blindage (SB, SC). Le transpondeur (TA) du premier feuillet (A) est posé sur l'élément de blindage (SB) du deuxième feuillet (B) tout comme le transpondeur (TC) du troisième feuillet (C). Le transpondeur (TB) du deuxième feuillet (B) est posé sur l'élément de blindage (SC) du troisième feuillet (C).

La présente invention peut s'appliquer à tout document comportant plusieurs feuillets sécurisés par des transpondeurs tel qu'un passeport ou un document de valeur. Les transpondeurs contenant des données numériques relatives au contenu écrit du document par exemple permettent d'empêcher toute fraude ou falsification. Une lecture sélective des transpondeurs simplement en tournant les pages du document devient avantageuse dans des systèmes automatisés chargés par exemple de comparer une lecture optique du contenu des pages du document avec celui stocké dans les mémoires des transpondeurs.

Selon une variante avec un niveau de sécurité additionnel, le document peut aussi comporter un marquage d'identification sur les éléments de blindages qui s'étendent sur tout ou partie d'un feuillet. Ce marquage peut consister en un code barre, des perforations, un graphisme ou des caractères imprimés, un hologramme ou un kinégramme, etc. ou encore une combinaison de ces types de marquage.

Les feuillets du support d'information selon l'invention peuvent être composés de matière des plus diverses, de préférence non métallique, qui ne perturbe pas le fonctionnement des transpondeurs lorsqu'ils sont activés. Leur forme et leurs dimensions, longueur, largeur et épaisseur peuvent également être variables et adaptées selon l'utilisation du support comme par exemple, une carte, un document de valeur, un portefeuille, un badge ou tout autre objet comportant au moins deux parties articulées pouvant se superposer sur tout ou partie de leur surface.

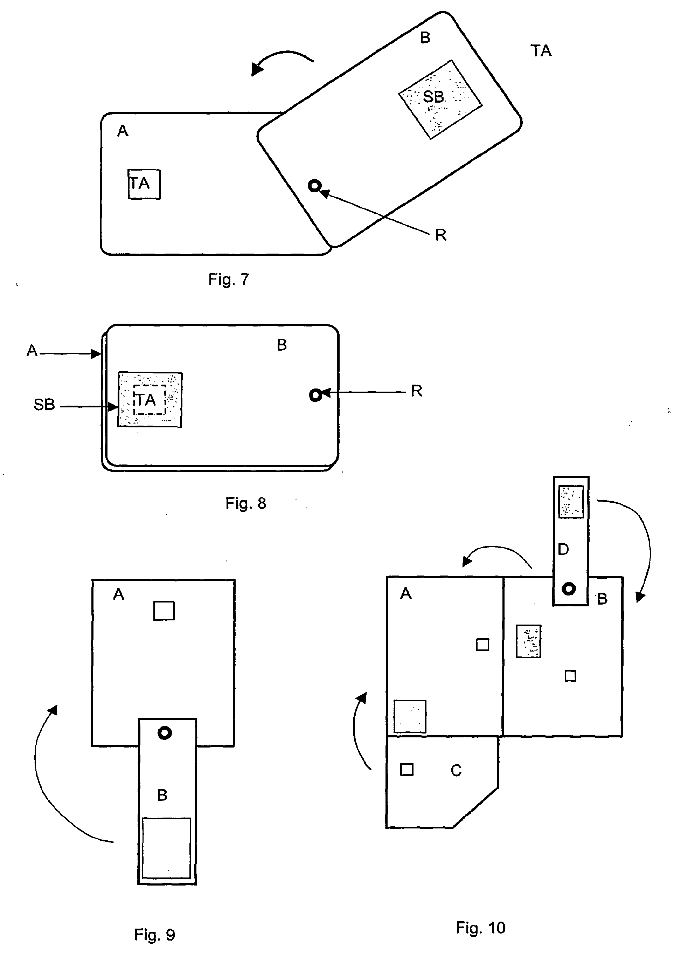

La figure 7 montre un exemple d'un support d'information sous forme d'une carte ou d'un badge par exemple constitué de deux parties ou feuillets (A, B) articulées selon un axe (R) de rotation perpendiculaire audites parties. Cet axe (R) est placé de préférence dans le voisinage du bord des feuillets (A, B) et peut être constitué, en fonction de l'épaisseur des feuillets, soit par un oeillet, une vis ou une goupille ou tout autre moyen de fixation. Il permet la rotation des deux feuillets (A, B) l'un sur l'autre afin de les écarter ou de les superposer.

Lorsque les deux parties (A, B) ou feuillets sont écartées (figure 7) le transpondeur (TA) du premier feuillet (A) peut être lu. Lorsque la seconde partie ou feuillet (B) se superpose sur la première (A), comme montré sur la figure 8, le transpondeur (TA) est recouvert par l'élément de blindage (SB) du second feuillet (B) empêchant ainsi la lecture dudit transpondeur (TA).

Cette variante peut s'appliquer à une carte de crédit ou d'identification dans le but d'éviter une lecture du transpondeur à l'insu de l'utilisateur portant la carte et passant à proximité d'un lecteur. En effet, pour activer la lecture, le porteur de la carte devra prendre sa carte et l'ouvrir en tournant l'un des deux feuillets afin de dégager le transpondeur avant de le présenter au lecteur.

Bien entendu, quelle que soit la configuration de l'articulation entre les deux feuillets (du type charnière ou du type goupille) ceux-ci peuvent être de dimensions et de formes différentes tout en étant adaptées à la taille et au positionnement du transpondeur et/ou de l'élément de blindage. La figure 9 montre un exemple ou le feuillet B portant l'élément de blindage est de surface inférieure à celle du feuillet A portant le transpondeur.

Selon une variante, le support d'information peut comporter plusieurs feuillets de diverses formes et dimensions articulés selon des axes soit du type charnière parallèles entre eux ou non ou de rotation du type goupille, permettant de superposer ou d'écarter un transpondeur d'un élément de blindage correspondant ou vice versa. La figure 10 montre un exemple de support d'information à quatre feuillets (A, B, C, D) articulés où les trois premiers feuillets A B et C sont articulés selon deux charnières perpendiculaires entre elles, et où le dernier feuillet D est articulé selon un axe de rotation.

## Revendications

1. Support d'information portable comprenant au moins deux parties (A, B) sensiblement planes articulées l'une à l'autre formant un ensemble dont une partie est superposable sur l'autre, la première partie (A) comporte un transpondeur (TA) disposé dans le plan de ladite partie (A), le seconde partie (B) comporte un élément de blindage (SB) s'étendant sur tout ou partie de ladite partie (B), ledit transpondeur (TA) étant destiné à être lu au moyen d'un lecteur approprié transmettant un signal électromagnétique activant l'émission d'une réponse par ledit transpondeur (TA), **caractérisé en ce que** ledit transpondeur (TA) de la première partie (A) est positionné en regard de l'élément de blindage (SB) de la seconde partie (B) lorsque les deux parties sont superposées empêchant l'activation du transpondeur (TA) par absorption du signal transmis par le lecteur, ladite activation ne s'effectuant que lorsque lesdites parties sont écartées l'une de l'autre et laissant apparaître le transpondeur (TA) éloigné de l'élément de blindage (SB).

2. Support d'information selon la revendication 1, **caractérisé en ce que** l'articulation entre les deux parties (A, B) est constituée par un axe formant une charnière, la première partie (A) se superposant sur la seconde partie (B) par rabattement au moyen de ladite charnière.

3. Support d'information selon la revendication 2, **caractérisé en ce que** l'ensemble des deux parties (A, B) articulée par la charnière forme un livret (L), chaque partie de dimensions comparables constitue un feuillet dudit livret.

4. Support d'information selon la revendication 1, **caractérisé en ce que** l'élément de blindage (SB) de la seconde partie (B) occupe une surface au moins équivalente à celle occupée par le transpondeur (TA) sur la première partie (A).

5. Support d'information selon la revendication 1, **caractérisé en ce que** l'élément de blindage (SB) est constitué par une feuille électromagnétiquement conductrice intégrée dans la seconde partie (B).

6. Support d'information selon la revendication 3, **caractérisé en ce que** le transpondeur (TA) du premier feuillet (A) est placé symétriquement à l'élément de blindage (SB) du second feuillet (B) par rapport à la charnière reliant des deux feuillets (A, B) lorsque lesdits feuillets (A, B) sont écartés et disposés dans un même plan.

7. Support d'information selon la revendication 6, **caractérisé en ce que** chaque feuillet (A, B) comprend un transpondeur (TA, TB) et un élément de blindage positionnés de sorte que lorsque les deux feuillets sont superposés, les transpondeurs (TA, TB) sont posés sur un élément de blindage correspondant du feuillet opposé à celui portant ledit transpondeur.

8. Support d'information selon la revendication 1, **caractérisé en ce qu'**il est constitué d'un livret (L) comportant une pluralité de feuillets (A, B, C) comprenant chacun un transpondeur (TA, TB, TC) et un élément de blindage (SB, SC) placés symétriquement de part et d'autre de l'axe formé par la liaison des feuillets (A, B, C), lesdits éléments de blindages (SB, SC) recouvrant les transpondeurs (TA, TB, TC) des feuillets superposés lorsque le livret (L) est ouvert en présentant les feuillets deux par deux (A, B), (B, C) et permettant une lecture sélective de chaque transpondeur (TA, TB, TC) porté par chaque feuillet ouvert.

9. Support d'information selon la revendication 1, **caractérisé en ce que** l'articulation entre les deux parties (A, B) est constituée par un axe de rotation perpendiculaire au plan formé par lesdites parties et situé dans une zone voisine du bord desdites parties.

10. Support d'information selon la revendication 9, **caractérisé en ce que** la première partie comprenant le transpondeur (TA) tournant autour dudit axe de rotation et venant se superposer sur la seconde partie comprenant l'élément de blindage (SB) empêche l'activation dudit transpondeur (TA) et vice versa.

11. Support d'information selon la revendication 9, **caractérisé en ce que** la première partie comprenant le transpondeur (TA) tournant autour dudit axe de rotation et s'écartant de la seconde partie comprenant l'élément de blindage (SB) permet l'activation dudit transpondeur (TA) et vice versa.

12. Support d'information selon la revendication 1, **caractérisé en ce qu'**il est constitué de plusieurs parties de dimensions et de formes diverses articulées entre elles selon des axes formant des charnières d'orientation variable.

13. Support d'information selon la revendication 1, **caractérisé en ce qu'**il est constitué de plusieurs parties de dimensions et de formes diverses articulées entre elles selon des axes de rotation perpendiculaires au plan formé par lesdites parties et situé dans une zone voisine du bord desdites parties.

14. Support d'information selon la revendication 1, **caractérisé en ce qu'**il est constitué de plusieurs parties de dimensions et de formes diverses articulées entre elles d'une part selon des axes formant des charnières d'orientation variable et d'autre part selon des axes de rotation perpendiculaires au plan formé par lesdites parties et situés dans une zone voisine du bord desdites parties.

## Claims

1. Portable information carrier comprising at least two substantially planar parts (A, B) articulated to each other forming an assembly in which one part can be superimposed on the other, the first part (A) includes a transponder (TA) arranged on the plane of said part (A), the second part (B) includes a shielding element (SB) that extends over all or part of said part (B), said transponder (TA) intended to be read by means of a suitable reader that transmits an electromagnetic signal activating the transmission of a response from said transponder (TA), **characterized in that** said transponder (TA) of the first part (A) is positioned facing the shielding element (SB) of the second part (B) when both parts are superimposed preventing the activation of the transponder (TA) by absorption of the signal transmitted by the reader, said activation being carried out when said parts are moved aside from each other, letting appear the transponder (TA) distant from the shielding element (SB).

2. Information carrier according to claim 1, **characterized in that** the articulation between the two parts (A, B) consists in an axis forming a hinge, the first part (A) superimposing the second part (B) by putting it down by means of said hinge.

3. Information carrier according to claim 2, **characterized in that** the assembly of two parts (A, B) articulated by the hinge forms a booklet (L), each part being of comparable size constitutes a sheet of said booklet.

4. Information carrier according to claim 1, **characterized in that** the shielding element (SB) of the second part (B) occupies a surface at least equivalent to that occupied by the transponder (TA) on the first part (A).

5. Information carrier according to claim 1, **characterized in that** the shielding element (SB) is made up of an electromagnetic conductive sheet integrated into the second part (B).

6. Information carrier according to claim 3, **characterized in that** the transponder (TA) of the first sheet (A) is positioned symmetrically to the shielding element (SB) of the second sheet (B) relatively to the hinge linking the two sheets (A, B) when said sheets (A, B) are moved aside and arranged on the same plane.

7. Information carrier according to claim 6, **characterized in that** each sheet (A, B) includes a transponder (TA, TB) and a shielding element positioned in such a way that when both sheets are superimposed, the transponders (TA, TB) are positioned on a corresponding shielding element of the sheet opposite to that carrying said transponder.

8. Information carrier according to claim 1, **characterized in that** it is made up of a booklet (L) including a plurality of sheets (A, B, C) each comprising a transponder (TA, TB, TC) and a shielding element (SB, SC) positioned symmetrically on both sides of the axis formed by the link of the sheets (A, B, C), said shielding elements (SB, SC) covering the transponders (TA, TB, TC) of the superimposed sheets when the booklet (L) is opened by presenting the sheets two at a time (A, B), (B, C) and allowing the selective reading of each transponder (TA, TB, TC) carried by each opened sheet.

9. Information carrier according to claim 1, **characterized in that** the articulation between the two parts (A, B) is made up of a rotating axis perpendicular to the surface formed by said parts and situated in an area adjacent to the edge of said parts.

10. Information carrier according to claim 9, **characterized in that** the first part comprising the transponder (TA) rotating around said rotation axis and when superimposed on the second part comprising the shielding element (SB) prevents the activation of said transponder (TA) and vice versa.

11. Information carrier according to claim 9, **characterized in that** the first part comprising the transponder (TA) rotating around said rotating axis and when moved aside from the second part comprising the shielding element (SB) allows the activation of said transponder (TA) and vice versa.

12. Information carrier according to claim 1, **characterized in that** it is made up of several parts of different sizes and shapes articulated each other according to axes forming hinges which are oriented in different directions.

13. Information carrier according to claim 1, **characterized in that** it is made up of several parts of different sizes and shapes articulated each other according to rotation axes perpendicular to the plan formed by said parts and situated in an area adjacent to the edge of said parts.

14. Information carrier according to claim 1, **characterized in that** it is constituted of several parts of different sizes and shapes articulated each other on one hand according to axes forming hinges which are oriented in different directions and on the other hand according to rotation axes perpendicular to the plane formed by said parts and placed in an area adjacent to the edge of said parts.1.

## Patentansprüche

1. Tragbarer Informationsträger mit mindestens zwei im wesentlichen ebenen, beweglich miteinander verbundenen Teilen (A, B), die eine Einheit bilden, in welcher das eine Teil auf das andere aufsetzbar ist und das erste Teil (A) einen Transponder (TA) umfasst, der in der Ebene des genannten Teils (A) angeordnet ist, und das zweite Teil (B) ein Abschirmungselement (SB) umfasst, das sich über den gesamten oder einen Teil des besagten Teils (B) erstreckt, wobei der besagte Transponder (TA) dafür bestimmt ist, mit Hilfe eines geeigneten Lesegeräts abgelesen zu werden, das ein elektromagnetisches Signal überträgt, das die Emission einer Antwort durch den besagten Transponder (TA) aktiviert, **gekennzeichnet dadurch, dass** der besagte Transponder (TA) des ersten Teils (A) gegenüber dem Abschirmungselement (SB) des zweiten Teils (B) platziert ist, wenn die beiden Teile übereinander liegen, die die Aktivierung des Transponders (TA) durch Absorption des vom Lesegerät übertragenen Signals verhindern, wobei die besagte Aktivierung nur dann erfolgt, wenn die genannten Teile voneinander beabstandet sind und den Transponder (TA) in Erscheinung bringen, der von dem Abschirmungselement (SB) entfernt liegt.

2. Informationsträger nach Anspruch 1, **gekennzeichnet dadurch, dass** das Gelenk zwischen den beiden Teilen (A, B) aus einer Achse besteht, die ein Scharnier bildet, wobei sich das erste Teil (A) durch Absenkung mittels des besagten Scharniers auf das zweite Teil (B) aufsetzt.

3. Informationsträger nach Anspruch 2, **gekennzeichnet dadurch, dass** die Einheit der durch das Scharnier gegliederten zwei Teile (A, B) ein kleines Buch (L) bildet, wobei jedes Teil von vergleichbaren Dimensionen ein Blatt des genannten Buches bildet.

4. Informationsträger nach Anspruch 1, **gekennzeichnet dadurch, dass** das Abschirmungselement (SB) des zweiten Teils (B) eine Oberfläche einnimmt, die mindestens derjenigen äquivalent ist, die vom Transponder (TA) auf dem ersten Teil (A) eingenommen wird.

5. Informationsträger nach Anspruch 1, **gekennzeichnet dadurch, dass** das Abschirmungselement (SB) aus einem elektromagnetisch leitenden Blatt besteht, das im zweiten Teil (B) integriert ist.

6. Informationsträger nach Anspruch 3, **gekennzeichnet dadurch, dass** der Transponder (TA) des ersten Blattes (A) symmetrisch zum Abschirmungselement (SB) des zweiten Blattes (B) gegenüber dem Scharnier platziert ist, das die beiden Blätter (A, B) verbindet, wenn die besagten Blätter (A, B) in ein und derselben Ebene voneinander beabstandet und angeordnet sind.

7. Informationsträger nach Anspruch 6, **gekennzeichnet dadurch, dass** jedes Blatt (A, B) einen Transponder (TA, TB) und ein Abschirmungselement umfasst, die so positioniert sind, dass, wenn die beiden Blätter aufeinander liegen, die Transponder (TA, TB) auf ein Abschirmungselement aufgesetzt sind, das dem Blatt entspricht, das jenem gegenüberliegt, das den besagten Transponder führt.

8. Informationsträger nach Anspruch 1, **gekennzeichnet dadurch, dass** dieser aus einem Buch (L) besteht, das eine Vielzahl von Blätter (A, B, C) aufweist, die jeweils einen Transponder (TA, TB, TC) und ein Abschirmungselement (SB, SC) enthalten, die symmetrisch auf beiden Seiten der durch die Verbindung der Blätter (A, B, C) ausgebildeten Achse platziert sind, wobei die besagten Abschirmungselemente (SB, SC) die Transponder (TA, TB, TC) der überlagerten Blätter bedecken, wenn das Buch (L) geöffnet ist und paarweise die Blätter (A, B), (B, C) zeigt und so ein selektives Ablesen jedes Transponders (TA, TB, TC) möglich ist, der von jedem geöffneten Blatt geführt wird.

9. Informationsträger nach Anspruch 1, **gekennzeichnet dadurch, dass** das Gelenk zwischen den beiden Teilen (A, B) aus einer Drehachse besteht, die senkrecht zu der von den besagten Teilen ausgebildeten Ebene und in einem benachbarten Bereich des Randes der besagten Teile liegt.

10. Informationsträger nach Anspruch 9, **gekennzeichnet dadurch, dass** das erste Teil, das den Transponder (TA) enthält, der sich um die Drehachse dreht und sich auf das zweite, das Abschirmungselement (SB) enthaltende Teil aufsetzt, die Aktivierung des genannten Transponders (TA) verhindert und umgekehrt.

11. Informationsträger nach Anspruch 9, **gekennzeichnet dadurch, dass** das erste Teil, das den Transponder (TA) enthält, der sich um die Drehachse dreht und sich von dem zweiten Teil beabstandet, das das Abschirmungselement (SB) enthält, die Aktivierung des genannten Transponders (TA) gestattet und umgekehrt.

12. Informationsträger nach Anspruch 1, **gekennzeichnet dadurch, dass** dieser aus mehreren Teilen von unterschiedlichen Dimensionen und Formen besteht, die untereinander nach Achsen gegliedert sind, die Scharniere veränderlicher Ausrichtung bilden.

13. Informationsträger nach Anspruch 1, **gekennzeichnet dadurch, dass** dieser aus mehreren Teilen von unterschiedlichen Dimensionen und Formen besteht, die untereinander nach Drehachsen gegliedert sind, die senkrecht zu der von den besagten Teilen ausgebildeten Ebene und in einem benachbarten Bereich des Randes der besagten Teile liegen.

14. Informationsträger nach Anspruch 1, **gekennzeichnet dadurch, dass** dieser einerseits aus mehreren Teilen von unterschiedlichen Dimensionen und Formen besteht, die einerseits untereinander nach Achsen gegliedert sind, die Scharniere veränderlicher Ausrichtung bilden und andererseits nach Drehachsen gegliedert sind, die senkrecht zu der von den besagten Teilen ausgebildeten Ebene und in einem benachbarten Bereich des Randes der besagten Teile liegen.
